# EUROPÄISCHE PATENTSCHRIFT

(11) **EP 1 138 470 B1**
(45) Veröffentlichungstag und Bekanntmachung des Hinweises auf die Patenterteilung: **12.05.2004**
(21) Anmeldenummer: 01106356.7
(22) Anmeldetag: 16.03.2001
(51) Int. Cl.: B29C 70/88, B29C 70/46, B29C 70/78

(54) **Innenverkleidung für ein Kraftfahrzeug, aufweisend ein integriertes Heizelement**
Vehicle interior panel comprising an integrated heating element
Panneau intérieure de véhicule automobile comprenant un élément de chauffage intégré

(30) Priorität: 27.03.2000 DE 10015158
(43) Veröffentlichungstag der Anmeldung: 04.10.2001
(73) Patentinhaber: Lisa Dräxlmaier GmbH, 84137 Vilsbiburg (DE)
(72) Erfinder: Dräxlmaier, Fritz, 84036 Landshut (DE); Ehrenberger, Bernd, 84183 Niederviehbach (DE)
(74) Vertreter: HOFFMANN - EITLE

(56) Entgegenhaltungen:
- EP-A- 1 026 019
- DE-A- 2 628 731
- DE-A- 4 221 454
- DE-A- 4 221 455
- DE-A- 19 704 383
- DE-A- 19 816 816
- DE-A- 19 846 402
- DE-B- 1 254 264
- US-A- 5 396 699
- US-A- 6 015 965

## Beschreibung

Die Erfindung betrifft ein Formträgerteil für ein Fahrzeug wie beispielsweise ein Kraft- oder Schienenfahrzeug, Flugzeug oder auch Schiff oder allgemein ein Innenausstattungs- oder Verkleidungsteil, das mit einem integrierten Heizelement versehen ist, um zum einen ein angenehmes Berührgefühl zu schaffen und zum anderen, zu vermeiden, dass im Umgebungsbereich eines solchen Teils ein Kältegefühl aufkommt, das von Personen als unangenehm empfunden werden kann und unter Umständen auch zu unangenehmem Zug führen kann.

Formträgerteile im Sinne der vorliegenden Anmeldung sind Innenverkleidungen, wie beispielsweise Tür- oder Dachinnenverkleidungen für Kraftfahrzeuge oder auch andere dreidimensional gestaltete Bauteile oder flächige Trägerelemente, auf denen optional zusätzlich ein Dekormaterial aufgebracht ist. Auch Mittelkonsolen, Armlehnen oder Einzelteile hiervon sind hierunter zu subsumieren. Dekormaterialien können hier Leder, Lederersatzstoffe, Kunststoffbeschichtungen, Folien etc. sein.

### Stand der Technik

Es ist bekannt, Formträgerteile in einem Formpresswerkzeug herzustellen. Dabei sind z.B. Verstärkungseinlagen bzw. Verstärkungsfasern, etwa Naturfasern aus Flachs und Sisal, in eine Kunststoffmatrix, z.B. Polyurethan, eingebunden. Ein Zuschnitt aus dem Verstärkungsmaterial und die Kunststoffmatrix werden in dem Formpresswerkzeug unter Druck und Temperatur zum gewünschten Formträgerteil formgepresst und ausgehärtet. Sodann werden die gewünschten Dekorschichten hierauf aufkaschiert. Derartige, ein attraktives Äußeres aufweisende Formträgerteile können unmittelbar als Innenverkleidungsteile eingesetzt werden.

Es ist bereits hinlänglich bekannt, in Kraftfahrzeugen Heizelemente vorzusehen, um, wie eingangs beschrieben, im Bereich von Innenverkleidungsteilen ein unangenehmes Kältegefühl zu vermeiden. So ist in der DE 30 03 154 C2 eine Tür offenbart, in der ein Flächenheizkörper vorgesehen ist. Ein spezieller Zweck dieses Flächenheizkörpers besteht darin, im Inneren von Personenkraftwagen ein wesentlich behaglicheres Klima zu erzeugen als mit zwangskonvektiver Raumbeheizung. Bei der hier vorgeschlagenen Lösung zur Beheizung der Tür ist der Flächenheizkörper allerdings als hohles Element ausgebildet und als Wärmeträger Flüssigkeit oder ein Gas vorgesehen. Damit ist bei dieser Lösung das Problem vorhanden, dass ein großer Bauraum für das Heizelement notwendig ist, zudem sind aufwendige Verbindungsstellen zu den Peripheriegeräten erforderlich.

Eine sehr ähnliche Lösung ist aus der DE 27 19 616 C2 bekannt. Hier sind Plattenwärmetauscher als Wärmestrahler in der Seitentürverkleidung vorgesehen. Als Wärmeträger dient eine Flüssigkeit, wodurch ebenfalls die zuvor genannten Probleme auftreten.

Aus der EP 0 350 896 A1 bzw. dem korrespondierenden Gebrauchsmuster DE 88 09 007 U1 ist bekannt, ein Heizelement in einem Fahrzeuginnenraum vorzusehen, das als Wärmetauscher in Form eines Flächenelementes ausgebildet ist. Der Flächenheizkörper ist in der Seitenwandverkleidung eingebaut. Auch hier ist der erforderliche Bauraum sehr groß und die entsprechenden Einrichtungen sind sehr aufwendig, um diesen Heizkörper zu betreiben. Das gleiche gilt für die Lösung gemäß DE 35 16 444 A1, die mit dem Gebrauchsmuster DE 84 20 082 U1 übereinstimmt und Plattenwärmetauscher offenbart. Zu diesen hierin offenbarten Lösungsprinzipien sind noch die DE 28 34 838 A1 wie auch die US 4,920,759 zu nennen. In letzter Druckschrift ist ein Heizkörper in einer Dachverkleidung wie auch in einer Türverkleidung vorgeschlagen. Zwar ist der erforderliche Bauraum hier geringer und die erforderlichen Peripheriegeräte bei der letzten Druckschrift weniger aufwendig als bei den vorgenannten, da hier Keramikheizungen vorgeschlagen werden, aber weiterhin ist der erforderliche Bauraum nicht unbeträchtlich.

Schließlich ist in der JP 60-213519 ein Heiz- oder Kühlelement in Form eines Peltier-Elementes offenbart, das in eine Türarmauflage, Mittelkonsole oder eine Sitzarmlehne einzubauen ist. Auch hier ist ein großer Bauraum erforderlich und nur schwerlich eine gleichmäßige Beheizung möglich.

Aus der DE 42 21 454 A1, sowie der DE 42 21 455 A1 sind Heizelemente aus elektrisch leitfähigen Fasergeweben bekannt, die mit einem aushärtbaren Kunstharz imprägniert sind. Das Kunstharz dient als Bindemittel, welches die Aufgabe hat, nach dem Aushärten die Gewebestruktur gegen Verschiebung und Zerstörung der Fasern zu sichern. Das Laminat aus Bindemittel und Fasern wird in einer Presse unter hohem Druck verdichtet, um die Fasern an Faserkreuzungspunkten abzuplatten. Bei den so hergestellten Heizelementen handelt es sich im Wesentlichen um ebene Heizelemente, die vorzugsweise als Fußbodenheizung verwendbar sind, wobei das Heizelement direkt in den Kunststoffbodenbelag eingebaut werden könnte.

Die US 5,396,699 offenbart ein Verfahren zum Einbringen eines Heizelements in eine Verbundstruktur. In diesem Zusammenhang wird ein Dorn als Grundkörper hergestellt, sowie werden imprägnierte Schichten in einem separaten Schritt vorbereitet. Diese Schichten werden anschließend in arbeitsintensiver Handarbeit auf den Grundkörper aufgelegt. Ferner umfasst das Verfahren Anbringen des Heizelements und Einlegen in das Presswerkzeug, sowie den abschließenden Pressvorgang. Eine derartig hergestellte Kompositstruktur wird hauptsächlich bei der Herstellung von Satelliten verwendet. Das offenbarte Herstellungsverfahren ist für die Fertigung von Formträgerteilen in hohen Stückzahlen jedoch zu aufwendig und zu kostenintensiv.

Aus der DE 1 254 264 ist ein Verfahren und eine Vorrichtung zum Herstellen eines geschichteten elektrischen Heizkörpers von plattenförmiger Gestalt bekannt. Das dort beschriebene Verfahren für elektrische Heizkörper ist jedoch nicht auf die Herstellung von dreidimensionalen Formträgerteilen anwendbar.

Die DE 198 16 816 A1 offenbart ein elektrisch erwärmbares Flächenheizelement mit einem elektrisch nicht leitenden Grundgewebe, in das stromleitende Kontaktleiter und Heizleiter eingebunden sind. Das Heizelement kann beispielsweise ein Verkleidungsteil, ein Lenkrad oder ein Schloss erwärmen.

Schliesslich zeigt die EP 1 026 019 A2, welche als Stand der Technik nach Artikel 54(3) EPÜ anzusehen ist, ein Fahrzeug-Formteil aus einem Verbundwerkstoff mit darin unidirektional bzw. gleichgerichtet angeordneten Kohlefasern. Die gegeneinander isolierten Kohlefasem bilden im wesentlichen die tragende Struktur des Formteils und werden zugleich als Widerstands-Heizelemente für eine Flächenheizeinrichtung genutzt.

### Darstellung der Erfindung

Der Erfindung liegt das technische Problem zugrunde, eine kostengünstige, beheizbare und ohne weiteres auch weiterbearbeitbare Innenverkleidung zu schaffen.

Dieses der Erfindung zugrunde liegende technische Problem wird durch eine Innenverkleidung mit den Merkmalen des Anspruchs 1 gelöst.

Bei einem Verfahren zur Herstellung einer erfindungsgemäßen Innenverkleidung wird zuerst zumindest ein flächiges, dreidimensional verformbares Heizelement in den Formhohlraum eines Formpresswerkzeuges an eine Wandung des Formhohlraums angrenzend positioniert. Daraufhin wird eine Kunststoffmatrix in den Formhohlraum eingebracht und die Kunststoffmatrix wird im Formpresswerkzeug zu einem Formträgerteil verpresst und ausgehärtet. Dabei wird durch die Kunststoffmatrix mit dem flächigen Heizelement eine Haftverbindung zwischen der Oberfläche des Formträgerteils und dem Heizelement hergestellt. Dabei kann das Heizelement auf einer der beiden Flachseiten, also der Vorder- oder der Rückseite des Formträgerteils angeordnet werden.

Somit wird bereits bei der Herstellung des Formträgerteils das Heizelement der Kontur des Formträgerteils folgend angepasst und unmittelbar bei der Herstellung des Formträgerteils integriert. Es wird also ein erfindungsgemäßes Formträgerteil geschaffen, das durch Verpressen und Aushärten einer Kunststoffmatrix geformt ist und in das zumindest in einem Teilflächenbereich ein flächiges, dreidimensional verformbares Heizelement in die ausgehärtete Kunststoffmatrix integriert ist. Die Verfahrensweise hat den Vorteil, dass die Herstellung von Formträgerteilen an sich nur unwesentlich abgeändert werden muss und das Heizelement bereits unmittelbar bei der Herstellung des Formträgerteils integriert wird, wodurch sich das Handling eines solches Teils bei der weiteren Bearbeitung gegenüber dem bisherigen Formträgerteil nicht verändert.

Hinsichtlich der Herstellung liegt der Gedanke zugrunde, ein an sich als Sitzheizung verwendetes dreidimensionales verformbares Heizelement, wie es beispielsweise aus der US 5,723,845 bekannt ist, erstmals bereits bei der Herstellung eines Formträgerteils zu dessen späterer Beheizung zu integrieren, wobei ausgenutzt wird, dass sich das flächige Heizelement an die gewünschte dreidimensionale Gestalt des Formträgerteils automatisch anpasst. Als flächiges Heizelement kommt ein Stoff, ein Gewebe oder ein Gewirke mit beheizbaren Heizwiderstände, insbesondere in Form von Karbon-Fäden oder Karbon-Drähten, die in gewünschter Weise beabstandet in dem Flächengebilde eingebaut sind, zum Einsatz.

Ein solches Heizelement hat darüber hinaus den Vorteil, dass spätere Nachbearbeitungen des Formträgerteils, z.B. Ausstanzen von Ausnehmungen oder Bohren von Löchern, keinen größeren Einfluss auf die Heizbarkeit des Formträgerteils haben, da derartige Bearbeitungen auch ohne weiteres an dem nunmehr integrierten verformbaren Heizelement vornehmbar sind, ohne dass dessen Funktion darunter leidet. Bei dem hier verwendeten Heizelement sind nämlich immer mehrere elektrische Anschlüsse vorhanden, die zur Versorgung eines bestimmten Abschnitts des Heizelements dienen. Sollte nun eine Unterbrechung durch eine Ausstanzung vorhanden sein, so wird dieser Abschnitt eben nicht mehr beheizbar sein, der restliche Teil allerdings schon. Derartige Heizelemente werden insbesondere unter dem Markennamen CARBOTEX® der Firma W.E.T. in Deutschland angeboten.

Ein derart hergestelltes erfindungsgemäßes Formträgerteil ist in einfachster Weise, wie bereits zuvor angedeutet, weiter zu verarbeiten. Es ist äußerst kostengünstig und für eine Beheizung muss lediglich noch an die vorhandenen Anschlüsse Strom angelegt werden. Es wird hierdurch ein angenehmes Berührgefühl erzeugt, es kann auch durch entsprechende Vorschaltung von Einstellgeräten die gewünschte Temperatur eingestellt werden. Die in der vorhandenen Ausführungsform vorhandenen Karbonfasern im Heizelement bieten auch eine Verstärkung des Formträgerteils. Individuell können ohne weiteres auch bestimmte Bereiche beheizt werden, entweder, indem nur in diesen vorbestimmten Abschnitten des Formträgerteils das Heizelement bei der Herstellung vorgesehen wird, oder indem nur bestimmte Anschlüsse mit Strom beaufschlagt werden. Eingangs wurde bereits erwähnt, dass ohne weiteres auch Ausstanzungen etc. oder Bohrungen einbringbar sind und die Funktion des bereits in der Herstellung integrierten Heizelementes hierdurch nicht beeinträchtigt wird. Durch die äußerst dünne Gestaltung des Heizelementes wird das Formträgerteil gegenüber einer Herstellung ohne Heizelement so gut wie nicht dicker. Auch das zusätzliche Gewicht ist überhaupt kein Problem. Das Gewicht des Heizelementes ist gegenüber dem Gesamtgewicht des Formträgerteils absolut vernachlässigbar.

Bei der Herstellung wird mit anderen Worten das flächige Heizelement in Form eines mit Heizwiderständen aus Karbonfasern oder dergleichen vorgesehenen Geflechts, Gewirkes, Stoffs oder Gewebes an eine Wandung des Formpresswerkzeuges angelegt, z.B. auf den Pressstempel bzw. die Pressmatrize, oder das Heizelement kann so in den Formhohlraum eingebracht werden, dass es nach dem Schließen bzw. Zusammenfahren des Formpresswerkzeuges an einer Wandung des Werkzeuges anliegt. Es wird eine Kunststoffmatrix in den Formhohlraum eingebracht und die Kunststoffmatrix wird im Formpresswerkzeug zum Formträgerteil gepresst und ausgehärtet. Dabei stellt die Kunststoffmatrix eine Haftverbindung zwischen Formträgerteil und Heizelement her. Erfindungsgemäß erfüllt damit die Kunststoffmatrix also eine Doppelfunktion. Zum einen bildet sie die Form des Formträgerteils aus, zum anderen dient sie als Haftverbindungsmittel zwischen der Formträgerteiloberfläche und dem Heizelement. Mit anderen Worten wird der Herstellungsprozess des Formträgerteils gleichzeitig als Verbindungsprozess zum Integrieren und Anbringen eines flächigen Heizelementes auf dem Formträgerteil ausgenutzt. Überraschenderweise hat sich nämlich herausgestellt, dass die in das Formpresswerkzeug eingelegten dreidimensionalen verformbaren Heizelemente durch den anschließenden Verpressund Aushärtvorgang nicht beschädigt werden. Weiterhin hat sich gezeigt, dass ein guter Haftverbund zwischen Formträgerteil und Oberfläche und den entsprechenden Heizelementen erreicht wird. Ein Heizelement lässt sich glatt und blasenfrei an der dreidimensional geformten Formträgerteiloberfläche fixieren. Schließlich ist noch herauszustellen, dass bei dem Verfahren zuerst das Heizelement im Formhohlraum positioniert werden und die Kunststoffmatrix eingebracht werden kann oder umgekehrt.

Alternativ ist es aber auch möglich, dass das flächige Heizelement nach dem Aushärten der Kunststoffmatrix auf das bereits geformte Formträgerteil aufkaschiert wird, beispielsweise durch Kleben.

### Kurze Beschreibung der Zeichnungen

Im Folgenden ist zur weiteren Erläuterung und zum besseren Verständnis ein Ausführungsbeispiel der Erfindung unter Bezugnahme auf die beigefügten Zeichnungen näher beschrieben. Es zeigt:
- Fig. 1: eine schematisierte Draufsicht auf ein Formträgerteil gemäß der Erfindung für eine Türinnenverkleidung eines Kraftfahrzeuges mit innenseitig aufgebrachtem Heizelement, und
- Fig. 2: eine schematisierte Schnittansicht eines erfindungsgemäßen Formträgerteils mit an der Vorderseite durch eine Kunststoffmatrix anhaftendem Heizelement und darauf befindlicher Dekorschicht.

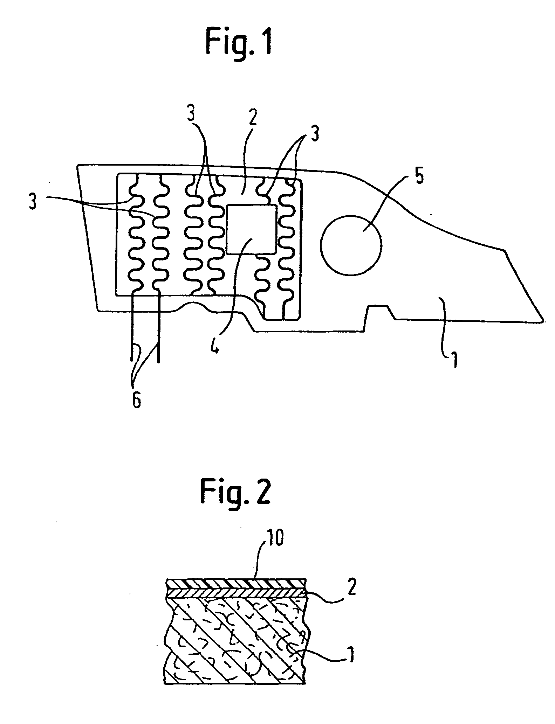

Anhand der Fig. 1 und 2 wird nachfolgend ein Ausführungsbeispiel eines erfindungsgemäßen Formträgerteils 1 beschrieben. Das Formträgerteil 1, hier eine Türinnenverkleidung für ein Kraftfahrzeug, besteht aus einem in Polyurethan-Bindematrix getränkten Naturfaserzuschnitt, der in einem Formpresswerkzeug verpresst in im Wesentlichen der dreidimensionalen Gestalt des zu formenden Innenverkleidungsteils vorliegt. Die Polyurethan-Bindematrix ist ausgehärtet. Durch die ausgehärtete Bindematrix haftet nach dem Herstellungsprozesss des Formträgerteils 1 (an sich bekanntes Verfahren) das auch an sich bekannte flächige, dreidimensional verformbare Heizelement 2 an der Vorderseite an. In dem Heizelement, dessen Trägerteil z.B. aus einem Stoff, einem Gewebe, einem Schaumstoff, einem Textilgewebe, Hostafan, Teflon, Silikon, Capton, Misanit, Prepreg besteht, sind in Form von Drähten oder Fäden Heizwiderstände 3 eingeflochten oder angenäht. Sie werden über Anschlüsse 6 mit elektrischem Strom versorgt und können entsprechend dem zugeführten Strom erwärmt werden. In dem in Fig. 1 gezeigten Innenverkleidungsteil sind Ausnehmungen 4 und Löcher 5 eingebracht, die auch nach Aufbringen des Heizelementes 2 in dem Formträgerteil 1 eingebracht werden können (beispielsweise durch Stanzen oder Bohren). Aus der in Fig. 2 gezeigten schematisierten Schnittansicht ist ersichtlich, dass auf diesem Formträgerteil mit integriertem Heizelement 2, je nach Bedarf, optional eine Dekorschicht 10, wie beispielweise Leder, eine Dekorfolie, eine Kunststofffolie oder dergleichen, aufkaschiert ist.

Die Herstellung dieses Formträgerteils erfolgt folgendermaßen. In einem Formpresswerkzeug mit einem Stempel und einer Matrix (Gesenk) wird der mit Polyurethan-Bindematrix getränkte Naturfaserzuschnitt eingelegt. Zwischen dem Stempel und dem so ausgestalteten Formträgerteil 1 wird das Heizelement 2 eingelegt. Dann wird das Formpresswerkzeug geschlossen und unter Wärmeeinbringung verpresst und ausgehärtet. Durch diesen Aushärtvorgang haftet nun das Heizelement 2 an der Vorderseite, aber auch wenn gewünscht, an der Rückseite des Formträgerteils 1 das Heizelement 2 an. Nach der weiteren Bearbeitung, wie beispielweise Einbringen der Ausschnitte 4 und 5 kann dann noch eine weitere Dekorschicht 10 aufkaschiert, d.h. aufgeklebt werden. Nach randseitiger Bearbeitung des Formträgerteils ist dieses dann für die Endmontage fertig.

## Patentansprüche

1. Innenverkleidung für ein Kraftfahrzeug, das durch Verpressen und Aushärten einer Kunststoffmatrix geformt ist, wobei auf der Innenverkleidung zumindest in einem Teilflächenbereich ein flächiges, dreidimensional verformbares Heizelement (2) angebracht ist.

2. Innenverkleidung nach Anspruch 1, **dadurch gekennzeichnet, dass** das flächige, dreidimensional verformbare Heizelement (2) aus einem Trägerstoff oder -gewebe besteht, in dem Heizdrähte (3) integriert sind.

3. Innenverkleidung nach Anspruch 1, **dadurch gekennzeichnet, dass** das Formträgerteil (1) einen Schichtstoff als Verstärkungseinlage enthält.

4. Innenverkleidung nach Anspruch 3, **dadurch gekennzeichnet, dass** der Schichtstoff als Zuschnitt aus Papier, Gewebe, Furnier, Vlies oder einer Matte aus Natur- und/oder Synthese- oder Glasfasern gebildet ist.

5. Innenverkleidung nach Anspruch 1, **dadurch gekennzeichnet, dass** das flächige, dreidimensional verformbare Heizelement (2) durch die ausgehärtete Kunststoffmatrix auf der Vorder- oder Rückseite des Formträgerteils (1) integriert ist.

6. Innenverkleidung nach Anspruch 1, **dadurch gekennzeichnet, dass** das flächige, dreidimensional verformbare Heizelement (2) auf der Vorder- oder Rückseite des Formträgerteils (1) aufgeklebt ist.

## Claims

1. Inner panelling for a motor vehicle which is shaped by pressing and curing a plastic matrix, wherein a flat, three-dimensionally deformable heating element (2) is attached to the inner panelling at least in a part surface region.

2. Inner panelling according to claim 1, **characterised in that** the flat, three-dimensionally deformable heating element (2) consists of a support material or support fabric, in which heating wires (3) are integrated.

3. Inner panelling according to claim 1, **characterised in that** the shaped support part (1) contains a laminate as reinforcing insert.

4. Inner panelling according to claim 3, **characterised in that** the laminate is formed as a blank of paper, fabric, veneer, nonwoven or a mat of natural fibres and/or synthetic fibres or glass fibres.

5. Inner panelling according to claim 1, **characterised in that** the flat, three-dimensionally deformable heating element (2) is integrated on the front side or rear side of the shaped support part (1) by the cured plastic matrix.

6. Inner panelling according to claim 1, **characterised in that** the flat, three-dimensionally deformable heating element (2) is adhered to the front side or rear side of the shaped support part (1).

## Revendications

1. Revêtement intérieur pour un véhicule automobile, formé par pressage et durcissement d'une matrice de matière synthétique, où, sur le revêtement intérieur, est appliqué, au moins dans une zone de surface partielle, un élément chauffant (2) plat, déformable de façon tridimensionnelle.

2. Revêtement intérieur selon la revendication 1, **caractérisé en ce que** l'élément chauffant (2) déformable de façon tridimensionnelle, plat, est formé d'un matériau ou tissu support, dans lequel sont intégrés des fils de chauffage (3).

3. Revêtement intérieur selon la revendication 1, **caractérisé en ce que** la partie support (1) contient un matériau en couche, à titre d'insert de renforcement.

4. Revêtement intérieur selon revendication 3, **caractérisé en ce que** le matériau en couche se présente sous forme d'une pièce en papier, tissu, plaquage, matelas de fibres ou matelas de fibres naturelles et/ou synthétiques ou de verre.

5. Revêtement intérieur selon la revendication 1, **caractérisé en ce que** l'élément chauffant (2) déformable de façon tridimensionnelle, plat, est intégré, au moyen de la matrice de matière synthétique durcie, sur la face avant ou arrière de la partie support (1).

6. Revêtement intérieur selon la revendication 1, **caractérisé en ce que** l'élément chauffant (2) déformable de façon tridimensionnelle, plat, est rapporté par collage sur la face avant ou arrière de la partie support (1).
